# EUROPEAN PATENT APPLICATION

(11) **EP 4 817 690 A1**
(43) Date of publication of application: **07.10.2026**
(21) Application number: 24897183.0
(22) Date of filing: 29.10.2024
(51) Int. Cl.: A62C 3/16, A62C 3/07, A62D 1/00, B65F 1/00, E04B 1/94, H01B 7/295, H01M 50/202, H01M 50/204

(54) **COMPOSITION FOR FIRE-EXTINGUISHING MATERIAL, FIRE-EXTINGUISHING MATERIAL, AND METHOD FOR PRODUCING SAME**

(30) Priority: 30.11.2023 JP 2023202748
(71) Applicant: Toppan Holdings Inc., Tokyo 110-0016 (JP)
(72) Inventor: KAKEGAWA, Shunta, Tokyo 110-0016 (JP); SHIINE, Yasuharu, Tokyo 110-0016 (JP); KUROKAWA, Masato, Tokyo 110-0016 (JP); HONJO, Yusaku, Tokyo 110-0016 (JP)
(74) Representative: Hoffmann Eitle
(86) International application number: PCT/JP2024/038581
(87) International publication number: WO 2025/115494

(57) **Abstract**

A fire-extinguishing material includes: a base material; and a fire-extinguishing agent layer formed on at least one surface of the base material. The fire-extinguishing agent layer contains a fire-extinguishing agent and a binder resin, in which the content of the fire-extinguishing agent in the fire-extinguishing agent layer is 60% by mass to 98% by mass relative to the mass of the fire-extinguishing agent layer, and the tensile elongation at break of the binder resin is 45 mm or more.

## Description

### [Technical Field]

The present disclosure relates to a composition for a fire-extinguishing material, a fire-extinguishing material, and a method for producing the same.

### [Background Art]

A lithium-ion battery is a representative example of a secondary battery. A lithium-ion battery may undergo thermal runaway due to a short circuit caused by a strong external impact, or due to overcharging. When a lithium-ion battery undergoes thermal runaway, a large amount of flammable gas is released, which can result in a serious fire. PTL 1 discloses arranging a flame-retardant heat-insulating sheet between a plurality of power storage units in order to prevent thermal propagation between the plurality of power storage units. On the other hand, placing a fire-extinguishing agent in advance in a location where ignition may occur is also being investigated. For example, PTL 2 discloses an aerosol fire-extinguishing agent composition capable of extinguishing a fire by generating an aerosol upon combustion.

### [Citation List]

### [Patent Literature]

PTL 1: JP 2019-147357 A
PTL 2: JP 6443882 B

### [Summary of the Invention]

### [Problem to be Solved by the Invention]

Even if the flame-retardant heat-insulating sheet described in PTL 1 can suppress the spread of fire, the sheet does not possess fire-extinguishing performance, and cannot suppress the outbreak of fire or the generation of high-temperature gas from a power storage unit that has already undergone thermal runaway. On the other hand, although PTL 2 discloses using a fire-extinguishing agent composition that has been molded into granules, pellets, tablets, spheres, or disks, the measures that should be taken in order for the molded body of the fire-extinguishing agent composition to maintain fire-extinguishing performance over a long period is not mentioned.

A fire-extinguishing material applied to a secondary battery is required to maintain fire-extinguishing performance over the service life of the secondary battery. According to investigations performed by the inventors, the molded body described in PTL 2 is prone to cracking during molding or use, and there is room for improvement in that the stability of the fire-extinguishing performance may be impaired by moisture entering the interior through cracks.

The present disclosure has been made in view of the problems described above, and provides a fire-extinguishing material in which cracks are unlikely to occur, and a method for producing the same. Furthermore, the present disclosure provides a composition for a fire-extinguishing material that is useful for producing a fire-extinguishing material in which cracks are unlikely to occur.

### [Solution to Problem]

A fire-extinguishing material according to the present disclosure includes: a base material; and a fire-extinguishing agent layer formed on at least one surface of the base material, wherein the fire-extinguishing agent layer contains a fire-extinguishing agent and a binder resin, a content of the fire-extinguishing agent in the fire-extinguishing agent layer is 60% by mass to 98% by mass relative to a mass of the fire-extinguishing agent layer, and a tensile elongation at break of the binder resin is 45 mm or more. The tensile elongation at break is an elongation at break of a sample measured by carrying out a tensile test in accordance with JIS K 7127 under conditions of a distance between sample chucks of 10 cm and a tensile speed of 50 mm/min, and the sample is a Type 2 test piece sample specified in JIS K 7127, and consists of a film having a thickness of 90 µm composed of the binder resin extracted from the fire-extinguishing agent layer.

According to the fire-extinguishing material described above, even if the fire-extinguishing agent layer contains a sufficient amount of the fire-extinguishing agent, by including the binder resin described above, the fire-extinguishing agent layer has excellent flexibility and bendability, such that the occurrence of cracks in the fire-extinguishing agent layer during the production and use of the fire-extinguishing material can be sufficiently suppressed. Since cracks are unlikely to occur in the fire-extinguishing agent layer, moisture is unlikely to enter the interior of the fire-extinguishing agent layer, whereby the fire-extinguishing performance can be maintained over a long period. The fire-extinguishing material has excellent bendability with, for example, a mandrel diameter of 18 mm or less. The mandrel diameter is the minimum diameter of a mandrel at which no cracks were observed in the base material and the fire-extinguishing agent layer when a Type 1 mandrel test was performed on the fire-extinguishing material in accordance with JIS K 5600-5-1.

A composition for a fire-extinguishing material according to the present disclosure contains a fire-extinguishing agent and a binder resin, wherein a content of the fire-extinguishing agent is 60% by mass to 98% by mass relative to a total mass of a solid content of the composition for a fire-extinguishing material, and a tensile elongation at break of the binder resin is 45 mm or more.

According to the composition for a fire-extinguishing material described above, even if a sufficient amount of the fire-extinguishing agent is contained, by including the binder resin described above, a fire-extinguishing agent layer having excellent flexibility and bendability can be formed. As a result, the occurrence of cracks in the fire-extinguishing agent layer can be sufficiently suppressed during the production of a fire-extinguishing material provided with the fire-extinguishing agent layer, and during the use of the fire-extinguishing material. In a case where the composition for a fire-extinguishing material is used as a coating liquid, the composition for a fire-extinguishing material further contains a liquid medium, and a viscosity of the coating liquid is preferably 1,600 mPa·s or more. The viscosity refers a value measured at a rotational speed of 12 rpm using a Brookfield viscometer. A fire-extinguishing agent layer obtained by forming the composition for a fire-extinguishing material into a sheet shape having a thickness of 150 µm has excellent bendability, for example, and has a mandrel diameter of 18 mm or less.

A method for producing a fire-extinguishing material according to the present disclosure includes: a step (a) for forming a coating film of the composition for a fire-extinguishing material described above on at least one surface of a base material by a wet coating method; and a step (b) for forming a fire-extinguishing agent layer on the surface of the base material by drying the coating film, wherein a maximum temperature when drying the coating film in step (b) is 100°C or lower, and a temperature is raised stepwise or continuously after starting step (b) until the maximum temperature is reached. A boiling point of a liquid medium contained in the composition for a fire-extinguishing material (coating liquid) is preferably 60°C to 90°C.

According to the method for producing a fire-extinguishing material according to the present disclosure, by setting the maximum temperature in step (b) to 100°C or lower, and raising the temperature stepwise or continuously until the maximum temperature is reached, a fire-extinguishing agent layer having excellent smoothness and sufficiently few defects can be formed. Crack formation in such a fire-extinguishing agent layer is suppressed. The wet coating method is preferably a coating method selected from a group consisting of comma coating, gravure coating, curtain coating, and die coating.

### [Advantageous Effects of the Invention]

According to the present disclosure, a fire-extinguishing material in which cracks are unlikely to occur and a method for producing the same are provided. In addition, according to the present disclosure, a composition for a fire-extinguishing material that is useful for producing a fire-extinguishing material in which cracks are unlikely to occur is provided.

### [Brief Description of the Drawings]

FIG. 1 is a cross-sectional view schematically showing an embodiment of a fire-extinguishing material according to the present disclosure.
FIG. 2 is a cross-sectional view schematically showing another embodiment of a fire-extinguishing material according to the present disclosure.

### [Description of the Embodiments]

Hereinafter, an embodiment of the present disclosure will be described in detail with reference to the drawings. Note that the present disclosure is not limited to the following embodiment.

### <Fire-Extinguishing Material>

The fire-extinguishing material of the present embodiment includes a fire-extinguishing agent layer formed by molding a composition for a fire-extinguishing material into a sheet shape. The fire-extinguishing material is used, for example, by being attached to a target object that may ignite. When the target object ignites, chemical species having a fire-extinguishing function are released from the composition for a fire-extinguishing material when exposed to the thermal energy of the ignition, thereby extinguishing the flame. Because there is no need to use a fire extinguisher, fire-extinguishing equipment, or the like in order to extinguish a fire, such a fire-extinguishing material is described as having "self-extinguishing properties".

The target object to be extinguished is not particularly limited as long as there is a risk of ignition. Examples of items with a risk of ignition include electric wires, distribution boards, distribution panels, control panels, storage batteries (such as lithium-ion batteries), building materials such as wallpaper for building materials and ceiling materials, lithium-ion battery collection boxes (recycling boxes), trash cans, automobile-related members, electrical outlets, and members such as outlet covers.

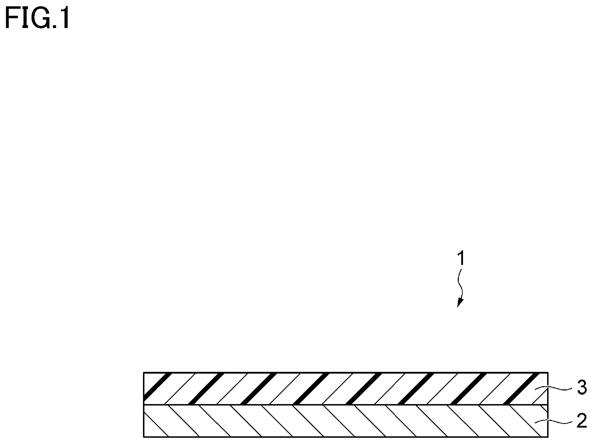

The fire-extinguishing material 1 shown in FIG. 1 includes a base material 2, and a fire-extinguishing agent layer 3 formed on one surface of the base material 2. The mandrel diameter of the fire-extinguishing material 1 may be 18 mm or less, 12 mm or less, 6 mm or less, or 3 mm or less. The "mandrel diameter" referred to here refers to the minimum diameter of a mandrel at which no cracks (breaks) were observed in the base material 2 and the fire-extinguishing agent layer 3 when a Type 1 mandrel test was performed on the fire-extinguishing material 1 in accordance with JIS K 5600-5-1. The minimum diameter of the mandrel possible in the test is 2 mm.

### (Base Material)

The base material 2 is a film that serves as a support body when the fire-extinguishing agent layer 3 is molded into a sheet shape. In consideration of the fact that the temperature of a flame is generally about 700°C to 900°C, a resin base material can be selected as the base material 2. For example, examples of the resin include polyolefins (such as LLDPE, PP, COP, and CPP), polyesters (such as PET), fluororesins (such as PTFE, ETFE, EFEP, PFA, FEP, and PCTFE), PVC, PVA, acrylic resins, epoxy resins, polyamides, polyimides, and the like. Such resins allow holes to be opened by heat. Further, by selecting a transparent material, it becomes easier to inspect the appearance of the fire-extinguishing material 1 and check the replacement time. Note that the base material 2 preferably has better flexibility and bendability than the fire-extinguishing agent layer 3.

The base material 2 may contain a fire-extinguishing agent described later. From the viewpoint of adjusting the water vapor transmission rate, the base material 2 may be provided with a vapor deposition layer (an alumina vapor deposition layer or a silica vapor deposition layer) having water vapor barrier properties.

The thickness, breaking strength, and the like of the base material 2 can be selected as appropriate according to the amount of heat produced at the time of fire, impact, allowable space, and the like. For example, if the base material is thick, strength and rigidity can be obtained, a highly planar form can be obtained, and handling becomes easier. Moreover, if the base material is thin, the fire-extinguishing body can be provided in a narrow space, and since a hole opens in a short time, the fire-extinguishing start time can be shortened. The thickness of the base material 2 can be, for example, 4.5 to 100 µm, and may be 12 to 50 µm. The base material 2 may be a laminate of a plurality of base materials. The base material 2 and a target object may be adhered by an adhesive layer. Note that it is also possible to form the fire-extinguishing agent layer directly on a film for encapsulating a fire-extinguishing agent without using a base material.

### (Fire-Extinguishing Agent Layer)

The fire-extinguishing agent layer 3 is formed by molding a composition for a fire-extinguishing material described later into a sheet shape. The thickness of the fire-extinguishing agent layer 3 may be 70 µm to 500 µm, 90 µm to 300 µm, or 110 µm to 200 µm. The mandrel diameter of the fire-extinguishing agent layer 1 may be 18 mm or less, 12 mm or less, 6 mm or less, or 3 mm or less. The "mandrel diameter" referred to here refers to the minimum diameter at which no cracks (breaks) were observed in the fire-extinguishing agent layer 3 when a Type 1 mandrel test was performed on the fire-extinguishing agent layer 3 alone in accordance with JIS K 5600-5-1. The minimum diameter possible in the test is 2 mm.

### <Composition for Fire-Extinguishing Material>

The composition for a fire-extinguishing material contains a fire-extinguishing agent and a binder resin. The content of the fire-extinguishing agent in the fire-extinguishing agent layer is 60% by mass to 98% by mass, and may be 80% by mass to 90% by mass, relative to the mass of the fire-extinguishing agent layer in a dry state. The content of the binder resin in the fire-extinguishing agent layer is 2% by mass to 40% by mass, and may be 5% by mass to 15% by mass, relative to the mass of the fire-extinguishing agent layer in a dry state. The total amount of the fire-extinguishing agent and the binder resin in the fire-extinguishing agent layer is, for example, 80% by mass to 100% by mass relative to the mass of the fire-extinguishing agent layer in a dry state. The composition for a fire-extinguishing material may contain a curing agent component and a flexibility imparting material, and may contain arbitrary additives such as a surfactant, a silane coupling agent, and an anti-blocking agent from the viewpoint of property stability.

### (Fire-Extinguishing Agent)

As the fire-extinguishing agent, organic salts or inorganic salts can be used individually or in a mixture. Examples of organic salts include potassium salts, sodium salts, and ammonium salts. As the organic salt, a potassium salt can be used. Examples of organic potassium salts include potassium carboxylates such as potassium acetate, potassium citrate (monopotassium citrate, dipotassium citrate, and tripotassium citrate), potassium tartrate, potassium lactate, potassium oxalate, and potassium maleate. Among these salts, potassium citrate can be suitably used from the viewpoint of being useful in terms of the negative catalytic effect of combustion.

Examples of inorganic salts include potassium salts and sodium salts. As the inorganic salt, a potassium salt can be used. Examples of inorganic potassium salts include potassium tetraborate, potassium carbonate, potassium hydrogen carbonate, potassium dihydrogen phosphate, and dipotassium hydrogen phosphate. Further, the fire-extinguishing agent may contain a compound having an oxidizing action. Examples of compounds having an oxidizing action include chlorates such as potassium chlorate, sodium chlorate, strontium chlorate, ammonium chlorate, and magnesium chlorate. These compounds generate aerosols from each potassium salt when exposed to the thermal energy of a fire.

### (Binder Resin)

As the binder resin, thermoplastic resins and thermosetting resins can be used. Examples of thermoplastic resins include polyolefin resins such as polypropylene-based resins, polyethylene-based resins, poly(1-)butene-based resins, and polypentene-based resins, polystyrene-based resins, acrylonitrile-butadiene-styrene-based resins, methyl methacrylate-butadiene-styrene resins, ethylene-vinyl acetate resins, ethylene-propylene resins, polycarbonate-based resins, polyphenylene ether-based resins, acrylic-based resins, polyamide-based resins, polyvinyl chloride-based resins, polyvinyl alcohol (PVA), and polyvinyl butyral (PVB). Examples of thermosetting resins include rubbers such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polysulfide rubber (PSR), silicone rubber (VMQ/MQ/PVMQ), fluororubber (FKM), and urethane rubber (U), polyurethane resins, phenol resins, epoxy resins, and polyvinyl ether (PMVE)-maleic anhydride resins.

As a result of using a resin having elasticity as the binder resin, cracking of the fire-extinguishing agent layer can be suppressed during the formation and use of the fire-extinguishing agent layer. Specifically, the tensile elongation at break of the binder resin is 45 mm or more, and may be, for example, 50 mm to 500 mm, or 100 mm to 500 mm. This tensile elongation at break refers to the elongation at break when a film made of the binder resin having a thickness of 90 µm is prepared, and a tensile test is performed using this film in accordance with JIS K 7127 under the following conditions. The film can be obtained, for example, by extracting the binder resin from the composition for a fire-extinguishing material or the fire-extinguishing agent layer, and forming the binder resin into a film having a thickness of 90 µm.

### <Test Conditions>

Test piece type: 2
Sample width: 25 mm
Distance between sample chucks: 10 cm
Tensile speed: 50 mm/min

The binder resin may include a compound having an acid anhydride group and an alkoxysilyl group. As a result of the fire-extinguishing agent layer containing such a compound, the properties of the fire-extinguishing agent layer can be stably maintained over a long period. Although the reason for this is not certain, it is presumed that because an acid anhydride group is capable of reacting with water, even if water enters into the fire-extinguishing agent layer, the compound traps the water and prevents deliquescence of the fire-extinguishing agent, and/or after the alkoxysilane is hydrolyzed, a self-reaction occurs to form siloxane, which improves the water resistance and film density, which suppresses contact between the deliquescent salt and water.

In a case where the composition for a fire-extinguishing material is used as a coating liquid, the composition for a fire-extinguishing material further includes a liquid medium. Hereinafter, the composition for a fire-extinguishing material containing a liquid medium is sometimes referred to as a "coating liquid". The coating liquid used for coating needs to have fluidity. However, if the fluidity of the coating liquid is too high, that is, if the viscosity of the coating liquid is too low, the coating liquid may flow locally before forming the fire-extinguishing agent layer, causing local cracks in the fire-extinguishing agent layer or non-uniformity in the in-plane thickness. From the viewpoint of forming a sufficiently smooth fire-extinguishing agent layer with a uniform thickness, the viscosity of the coating liquid is preferably 1600 mPa·s or more. This viscosity means a value measured at a rotational speed of 12 rpm using a Brookfield viscometer (spindle BL type No. 3). The lower limit of the viscosity may be 2,000 mPa·s or 3,000 mPa·s. The upper limit of the viscosity may be 7,000 mPa·s or 5,000 mPa·s.

### (Liquid Medium)

Examples of the liquid medium include organic solvents. Examples of organic solvents include water-soluble solvents, including alcohols such as methanol (boiling point: 64.7°C), ethanol (boiling point: 78.3°C), isopropyl alcohol (IPA, boiling point: 82.4°C), and n-propyl alcohol; esters such as ethyl acetate (boiling point: 77.1°C); ketones such as acetone (boiling point: 56°C) and methyl ethyl ketone (boiling point: 79.6°C); glycols such as ethylene glycol (boiling point: 197.3°C) and diethylene glycol (boiling point: 244.3°C); glycol ethers such as N-methylpyrrolidone (NMP, boiling point: 202°C), tetrahydrofuran (boiling point: 66°C), and butyl cellosolve (boiling point: 171.2°C). From the viewpoint of use with a hygroscopic fire-extinguishing agent, the liquid medium may be an alcohol-based solvent, and specifically, a mixed solvent of ethanol and isopropyl alcohol. As the liquid medium, a mixed solvent of ethanol and ethyl acetate may be used.

The amount of the liquid medium may be appropriately adjusted depending on the coating method, but can be 40 to 95% by mass relative to the total amount of the coating liquid.

### <Method for Producing Fire-Extinguishing Material>

The fire-extinguishing material 1 shown in FIG. 1 is produced through the following steps.
(a) A step for forming a coating film of the coating liquid on at least one surface of the base material 2 by a wet coating method
(b) A step for forming the fire-extinguishing agent layer 3 on the surface of the base material 2 by drying the coating film

In step (b), the maximum temperature when drying the coating film is 100°C or lower, and the temperature is raised stepwise or continuously after the start of step (b) until the maximum temperature is reached. In order to dry the coating film at a maximum temperature of 100°C or lower, the boiling point of the liquid medium is preferably 90°C or lower, and more preferably 80°C or lower. The boiling point of the liquid medium is preferably 60°C or higher, and more preferably 70°C or higher. The maximum temperature is preferably 100°C, more preferably 90°C, and even more preferably 80°C.

Examples of the wet coating method include comma coating, gravure coating, curtain coating, and die coating, and among these coating methods, comma coating and die coating are preferable from the viewpoint of controlling the film thickness of a thick fire-extinguishing agent layer. In these methods, a coating liquid is applied onto a base material in an arbitrary shape or over the entire surface, and then hot air or the like is applied in a drying furnace to evaporate the liquid medium and form a fire-extinguishing agent layer. At this time, if high-temperature drying is performed while a large amount of the liquid medium is remaining, only the very surface layer of the coating film is dried rapidly, resulting in skinning that inhibits the evaporation of the liquid medium in the film, which causes film formation defects, and a reduction in the strength and flexibility of the fire-extinguishing agent layer. For this reason, the maximum temperature during drying is preferably 100°C or lower as described above.

In step (b), when a first heat treatment is performed at a preheating temperature lower than the maximum temperature, and then a second heat treatment is performed at the maximum temperature, the preheating temperature is preferably lower than the boiling point of the liquid medium, and for example, is preferably 50 to 60°C. It is preferable to perform the second heat treatment after heating the entire coating film at the preheating temperature for 1 to 3 minutes. From the viewpoint of sufficiently volatilizing the liquid medium, the second heat treatment is preferably performed for a longer time than the first heat treatment, for example, and is preferably for 4 to 6 minutes.

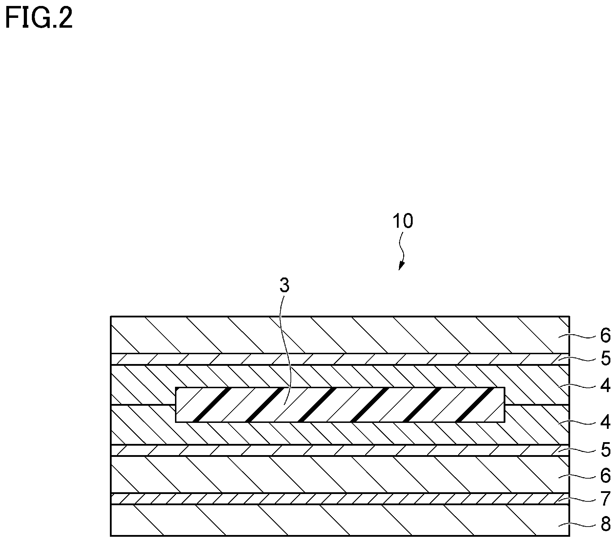

Although an embodiment of the present disclosure has been described in detail above, the present invention is not limited to the embodiment described above. In the embodiment described above, an aspect in which the fire-extinguishing agent layer 3 is formed on one surface of the base material 2 has been illustrated, but both surfaces of the fire-extinguishing agent layer 3 may be covered with a resin layer. For example, the fire-extinguishing material 10 shown in FIG. 2 includes resin layers 4 and 4 so as to cover the fire-extinguishing agent layer 3 from both surfaces, and further includes water vapor barrier layers 6 and 6 on both surfaces via adhesive layers 5 and 5. Furthermore, the water vapor barrier layer 6 on one side is further provided with a pressure-sensitive adhesive layer 7, and a release film 8 is laminated thereon. The release film 8 is peeled off when attaching the fire-extinguishing material 10 to a desired location, and may be made of resin or paper. The mandrel diameter of the fire-extinguishing material 10 may be 18 mm or less, 12 mm or less, 6 mm or less, or 3 mm or less.

Examples of the material of the resin layers 4 and 4 include polyolefins (such as PE, PP, and COP), polyesters (such as PET), fluororesins (such as PTFE, ETFE, EFEP, PFA, FEP, and PCTFE), vinyl resins (such as PVC and PVA), acrylic resins, epoxy resins, polyamides, and polyimides. The resin layers 4 and 4 may have heat fusibility (heat sealability). Examples of resins having heat fusibility include polyolefin resins. That is, the resin layers 4 and 4 may contain a polyolefin-based resin. Examples of the polyolefin-based resin include polyolefin-based resins such as low-density polyethylene resin (LDPE), linear low-density polyethylene resin (LLDPE), medium-density polyethylene resin (MDPE), and cast polypropylene resin (CPP); polyethylene-based resins such as ethylene-vinyl acetate copolymers and ethylene-α-olefin copolymers; and polypropylene-based resins such as propylene-ethylene random copolymers, propylene-ethylene block copolymers, and propylene-α-olefin copolymers. Among these resins, from the viewpoint of excellent heat sealability, low water vapor transmission rate, and ease of suppressing deterioration of the fire-extinguishing agent, the polyolefin resin may include low-density polyethylene resin (LDPE), linear low-density polyethylene resin (LLDPE), or cast polypropylene resin (CPP). Such resins have transparency, making visual inspection of the fire-extinguishing agent easy. Therefore, it becomes easy to check the replacement time and the like of the fire-extinguishing material laminate.

The resin layers 4 and 4 are made larger in area than the fire-extinguishing agent layer 3, and the fire-extinguishing agent layer 3 can be sealed by heat-sealing the portions where the resin layers 4 and 4 are in contact with each other. Note that, in FIG. 2, the fire-extinguishing agent layer 3 is used in a state where the base material 2 is peeled off from the fire-extinguishing material 1, but the fire-extinguishing material 1 itself may be sealed by the resin layers 4 and 4 without releasing the base material 2. The thickness of the resin layers 4 and 4 can individually be 25 µm to 150 µm, and may be 30 µm to 100 µm.

Examples of the adhesive constituting the adhesive layers 5 and 5 include acrylic-based adhesives, epoxy-based adhesives, silicone-based adhesives, polyolefin-based adhesives, urethane-based adhesives, polyvinyl ether-based adhesives, and synthetic adhesives thereof. Among these, from the viewpoint of achieving both adhesion to the resin layers 4 and 4 under high temperature and a high humidity of 85°C-85% RH and low cost, an epoxy-urethane synthetic adhesive can be suitably used as the adhesive.

The water vapor barrier layers 6 and 6 make it easier to maintain the water vapor barrier properties to such an extent that the properties of the fire-extinguishing agent do not change significantly regardless of the installation location or use environment of the fire-extinguishing material 10. The water vapor transmission rate (based on JIS K 7129, under conditions of 40°C/90% RH) of the water vapor barrier layers 6 and 6 is not particularly limited in order to enable a design according to the type of fire-extinguishing agent, but can be 10 g/m²/day or less, and may be 1 g/m²/day or less. From the viewpoint of adjusting the water vapor transmission rate, examples of the water vapor barrier layers 6 and 6 include polyester resin layers (for example, PET layers) provided with a metal oxide vapor deposition layer such as an alumina vapor deposition layer or a silica vapor deposition layer, and metal foils such as aluminum foil. In a case where the water vapor barrier layer includes a metal oxide vapor deposition layer, the metal oxide vapor deposition layer may face the fire-extinguishing agent side. The thickness of the water vapor barrier layers 6 and 6 can individually be 4.5 µm to 25 µm, and may be 7 µm to 12 µm.

As the pressure-sensitive adhesive layer 7, a known layer can be used as appropriate. In a case where the base material 2 is sealed together with the fire-extinguishing agent layer 3, the pressure-sensitive adhesive layer 7 is provided on the side that the base material 2 exists. The fire-extinguishing material 10 can be attached to a target object by the pressure-sensitive adhesive layer 7. When the target object to which the fire-extinguishing material 10 is attached ignites, the water vapor barrier layer 6, the adhesive layer 5, and the resin layer 4 melt due to the thermal energy, and chemical species having a fire-extinguishing function are released from the fire-extinguishing agent layer 3, thereby extinguishing the flame.

From the viewpoint of ensuring the property stability of the fire-extinguishing agent layer, the fire-extinguishing agent layer may be encapsulated in a packaging film. An arbitrary resin film can be used as the packaging film. For example, polyolefin resins, polyester resins, fluororesins, vinyl resins, acrylic resins, epoxy resins, polyamides, polyimides, urethane resins, styrene resins, polycarbonates, ketone resins, sulfone resins, cellulose resins, and the like can be used. The packaging film desirably has water vapor barrier properties, and the water vapor transmission rate (based on JIS K 7129, under conditions of 40°C/90% RH) can be 2 × 10² g/m²/day or less, and may be 1 × 10² g/m²/day or less. From the viewpoint of adjusting the water vapor transmission rate, examples of the film having water vapor barrier properties include polyester resin layers (for example, PET layers) provided with an inorganic metal oxide vapor deposition layer such as an alumina vapor deposition layer or a silica vapor deposition layer, and metal foils such as aluminum foil. In a case where the water vapor barrier layer includes a metal oxide vapor deposition layer, the metal oxide vapor deposition layer may face the fire-extinguishing agent layer side.

The packaging film may have an adhesive layer for sealing the fire-extinguishing material. The adhesive layer can be formed of a material such as heat seal material, an adhesive, or a pressure-sensitive adhesive. Further, the fire-extinguishing material may be provided with a sealed portion, and by joining the packaging films at the periphery of the fire-extinguishing agent layer to each other by the sealed portion, the fire-extinguishing agent layer does not come into contact with air, making it possible to suppress deterioration of property stability. In a case where the sealed portion has heat sealability, the sealed portion may be formed by thermal fusion. The adhesion strength between the base materials of the sealed portion may be 5 N/15 mm or more, and from the viewpoint of stably encapsulating the fire-extinguishing agent layer, the adhesion strength may be 7 N/15 mm or more, and may be 10 N/15 mm or more. The adhesion strength can be varied by adjustment of the resin layer, adjustment of the adhesive, adjustment of heat-sealing conditions (heat-sealing temperature, pressure, time), and the like. The adhesion strength between base materials is measured as follows. That is, a sample is prepared in which the resin layers of the base materials are bonded together by thermal fusion or an adhesive. The heat-sealed portion or bonded portion of the sample is cut to a width of 15 mm, and the average strength from the start of peeling until the heat-sealed portion or bonded portion separates under T-peeling at a peeling speed of 300 mm/min using a tensile tester placed in an environment at a room temperature of 23°C in accordance with JIS K 6854-3 is defined as the adhesion strength between base materials.

### [Examples]

Hereinafter, the present disclosure will be described more specifically with reference to Examples and Comparative Examples. Note that the present invention is not limited to the following Examples.

### <Example 1>

A fire-extinguishing agent was prepared by pulverizing potassium chlorate (KClO₃) and tripotassium citrate in an agate mortar such that the average particle diameter D50 was 12 µm or less. A composition for a fire-extinguishing material was obtained by mixing the fire-extinguishing agent with various materials at the following mixing ratio.
(1) Fire-extinguishing agent (potassium chlorate, tripotassium citrate) 87 parts by mass
(2) Binder resin
   (2-1) Polyvinyl butyral resin solution (solution in which 11 parts by mass of polyvinyl butyral resin was dissolved in 80 parts by mass of ethanol and 9 parts by mass of isopropyl alcohol) 50.1 parts by mass
   (2-2) EX-991L (Epoxy resin, Nagase ChemteX, solid content ratio 100%) 4.7 parts by mass (2-3) X-12-1287A (silane coupling agent having an acid anhydride group and an alkoxysilyl group, Shin-Etsu Chemical Co., Ltd., solid content ratio 100%) 2.8 parts by mass
(3) Liquid medium (ethanol) 87 parts by mass

The composition for a fire-extinguishing material was applied to one surface of a polyethylene terephthalate (PET) base material (trade name: E7002, manufactured by Toyobo Co., Ltd., thickness 50 µm) using an applicator such that the thickness of the fire-extinguishing agent layer after drying became 150 µm. After heating the coating film at a preheating temperature of 55°C for 2 minutes, the coating film was dried at 75°C (maximum temperature) for 5 minutes to obtain a fire-extinguishing material.

### <Example 2>

A fire-extinguishing material was produced in the same manner as in Example 1, except that the coating film was heated at a preheating temperature of 60°C for 2 minutes and then dried at 90°C (maximum temperature) for 5 minutes.

### <Example 3>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin
   (2-1) Polyvinyl butyral resin solution (solution in which 11 parts by mass of polyvinyl butyral resin was dissolved in 80 parts by mass of ethanol and 9 parts by mass of isopropyl alcohol) 84.4 parts by mass
   (2-2) EX-991L (Epoxy resin, Nagase ChemteX, solid content ratio 100%) 3.7 parts by mass
(3) Liquid medium (ethanol) 87 parts by mass

### <Example 4>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin
   (2-1) Polyvinyl butyral resin solution (solution in which 11 parts by mass of polyvinyl butyral resin was dissolved in 80 parts by mass of ethanol and 9 parts by mass of isopropyl alcohol) 107.4 parts by mass
   (2-2) EX-991L (Epoxy resin, Nagase ChemteX, solid content ratio 100%) 1.2 parts by mass
(3) Liquid medium (ethanol) 87 parts by mass

### <Example 5>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin
   (2-1) Polyvinyl butyral resin solution (solution in which 11 parts by mass of polyvinyl butyral resin was dissolved in 80 parts by mass of ethanol and 9 parts by mass of isopropyl alcohol) 107.4 parts by mass
   (2-2) EX-861 (Epoxy resin, Nagase ChemteX, solid content ratio 100%) 1.2 parts by mass
(3) Liquid medium (ethanol) 87 parts by mass

### <Example 6>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin
   (2-1) AD-393 (Modified urethane resin, Toyo-Morton, solid content ratio 50%) 22.14 parts by mass
   (2-2) CAT-EP1 (Isocyanate curing agent, Toyo-Morton, solid content ratio 100%) 1.46 parts by mass
(3) Liquid medium
   (3-1) Ethanol 87 parts by mass
   (3-2) IPA 1.46 parts by mass

### <Example 7>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin TAKELAC TE5899 (urethane resin, Mitsui Chemicals, solid content ratio 30%) 41.77 parts by mass
(3) Liquid medium
   (3-1) Ethanol 87 parts by mass
   (3-2) Ethyl acetate 10.44 parts by mass

### <Example 8>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin
   Ether-based polyurethane resin solution (solution in which 100 parts by mass of ether-based polyurethane resin was dissolved in 210 parts by mass of isopropyl alcohol) 40.3 parts by mass
(3) Liquid medium (ethanol) 87 parts by mass

### <Comparative Example 1>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin
   (2-1) MAXIVE M-100 (epoxy resin, Mitsubishi Gas Chemical, solid content ratio 100%) 2.76 parts by mass
   (2-2) MAXIVE C-97 (amine curing agent, Mitsubishi Gas Chemical, solid content ratio 65%) 13.64 parts by mass
(3) Liquid medium
   (3-1) Ethanol 91.7 parts by mass
   (3-2) Ethyl acetate 3.1 parts by mass

### <Comparative Example 2>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin
   (2-1) Polyvinyl butyral resin solution (solution in which 11 parts by mass of polyvinyl butyral resin was dissolved in 80 parts by mass of ethanol and 9 parts by mass of isopropyl alcohol) 84.4 parts by mass
   (2-2) X-12-1287A (silane coupling agent having an acid anhydride group and an alkoxysilyl group, Shin-Etsu Chemical, solid content ratio 100%) 3.7 parts by mass
(3) Liquid medium (ethanol) 87 parts by mass

### <Comparative Example 3>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin
   (2-1) Polyvinyl butyral resin solution (solution in which 11 parts by mass of polyvinyl butyral resin was dissolved in 80 parts by mass of ethanol and 9 parts by mass of isopropyl alcohol) 107.4 parts by mass
   (2-2) X-12-1267B (silane coupling agent having an acid anhydride group and an alkoxysilyl group, Shin-Etsu Chemical, solid content ratio 100%) 1.2 parts by mass
(3) Liquid medium (ethanol) 87 parts by mass

### <Reference Example 4>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin
   Ether-based polyurethane resin solution (solution in which 100 parts by mass of ether-based polyurethane resin was dissolved in 210 parts by mass of isopropyl alcohol) 40.3 parts by mass
(3) Liquid medium (ethanol) 174 parts by mass

### <Reference Example 5>

A fire-extinguishing material was produced in the same manner as in Example 1, except that a composition for a fire-extinguishing material having the following composition was used.
(1) Fire-extinguishing agent (potassium chlorate, tripotassium citrate) 87 parts by mass
(2) Binder resin
   (2-1) Polyvinyl butyral resin solution (solution in which 11 parts by mass of polyvinyl butyral resin was dissolved in 80 parts by mass of ethanol and 9 parts by mass of isopropyl alcohol) 50.1 parts by mass
   (2-2) EX-991L (Epoxy resin, Nagase ChemteX, solid content ratio 100%) 4.7 parts by mass
   (2-3) X-12-1287A (silane coupling agent having an acid anhydride group and an alkoxysilyl group, Shin-Etsu Chemical Co., Ltd., solid content ratio 100%) 2.8 parts by mass
(3) Liquid medium (ethanol) 174 parts by mass

### <Reference Example 6>

A fire-extinguishing material was produced in the same manner as in Example 1, except that the coating film was heated at a preheating temperature of 90°C for 2 minutes and then dried at 110°C (maximum temperature) for 5 minutes.

### <Reference Example 7>

A fire-extinguishing material was produced in the same manner as in Example 1, except that the coating film was dried at 90°C (maximum temperature) for 7 minutes.

### <Reference Example 8>

A composition for a fire-extinguishing material with a low content of fire-extinguishing agent was prepared and used to produce a fire-extinguishing material. That is, a fire-extinguishing material was produced in the same manner as in Example 1, except that the following composition for a fire-extinguishing material was used.
(1) Fire-extinguishing agent (potassium chlorate, tripotassium citrate) 50 parts by mass
(2) Binder resin
   (2-1) Polyvinyl butyral resin solution (solution in which 11 parts by mass of polyvinyl butyral resin was dissolved in 80 parts by mass of ethanol and 9 parts by mass of isopropyl alcohol) 192.6 parts by mass
   (2-2) EX-991L (Epoxy resin, Nagase ChemteX, solid content ratio 100%) 18.2 parts by mass
   (2-3) X-12-1287A (silane coupling agent having an acid anhydride group and an alkoxysilyl group, Shin-Etsu Chemical Co., Ltd., solid content 100%) 10.6 parts by mass
(3) Liquid medium (ethanol) 50 parts by mass

### <Reference Example 9>

A composition for a fire-extinguishing material with a low content of binder resin was prepared and used to produce a fire-extinguishing material. That is, a fire-extinguishing material was produced in the same manner as in Example 1, except that the following composition for a fire-extinguishing material was used.
(1) Fire-extinguishing agent (potassium chlorate, tripotassium citrate) 99 parts by mass
(2) Binder resin
   (2-1) Polyvinyl butyral resin solution (solution in which 11 parts by mass of polyvinyl butyral resin was dissolved in 80 parts by mass of ethanol and 9 parts by mass of isopropyl alcohol) 3.9 parts by mass
   (2-2) EX-991L (Epoxy resin, Nagase ChemteX, solid content ratio 100%) 0.4 parts by mass
   (2-3) X-12-1287A (silane coupling agent having an acid anhydride group and an alkoxysilyl group, Shin-Etsu Chemical Co., Ltd., solid content 100%) 0.2 parts by mass
(3) Liquid medium (ethanol) 99 parts by mass

### <Presence/Absence of Coating Film Cracking and Coating Film Non-Uniformity>

After forming the coating film on the surface of the base material, the presence/absence of coating film cracking and coating film non-uniformity was visually verified in the process of drying the coating film.

### <Measurement of Tensile Elongation at Break of Binder Resin>

A solution of each binder resin was applied onto a release-treated PET film using an applicator. The coating amount was adjusted so that the film thickness after drying was 90 µm. After drying the coating film, the binder resin film was obtained. A Type 2 test piece (sample width 25 mm) sample according to JIS K 7127 was obtained from the film. Using an autograph tester AGS-X (Shimadzu Corporation), the sample was pulled at a speed of 50 mm/min from a state where the sample was held so that the chuck width was 10 cm, and the elongation at break was measured.

### <Measurement of Viscosity of Coating Liquid>

A spindle BL type No. 3 was set in a Brookfield viscometer BL model (Toki Sangyo), and the viscosity of the coating liquid at a rotation speed of 12 rpm was measured.

### <Mandrel Test>

A fire-extinguishing material cut into 100 mm × 50 mm was bent in a Type 1 mandrel test in accordance with JIS K 5600-5-1, and a case where the fire-extinguishing agent layer bent without cracking at a diameter of 18 mm was evaluated as "O", and a case where the layer cracked was evaluated as "X".

### <Fire-Extinguishing Test>

A 1 cm square solid fuel was ignited. A fire-extinguishing material was placed at a position 8 cm above the solid fuel so that the fire-extinguishing agent layer faced the burning solid fuel, and it was verified whether the fire could be extinguished. A case where the fire could be extinguished was evaluated as "O", and a case where the fire could not be extinguished was evaluated as "X".

The results are shown in Tables 1 to 4. In the tables, "-" means not measured or impossible to evaluate.

**[Table 1]**

| | | Example 1 | Example 2 | Example 3 | Example 4 |
|---|---|---|---|---|---|
| Fire-extinguishing agent | | Mixture of tripotassium citrate and potassium chlorate | | | |
| Binder resin | | PVB | PVB | PVB | PVB |
| | Material | EX-991L | EX-991L | | |
| | | X-12-1287A | X-12-1287A | EX-991L | EX-991L |
| | Tensile elongation at break [mm] | 101.6 | 101.6 | 113.9 | 70.5 |
| Liquid medium | | Ethanol | Ethanol | Ethanol | Ethanol |
| Coating liquid viscosity [mPa·s] | | 4,300 | 4,300 | - | - |
| Drying temperature [°C] | Preheating temperature | 55 | 60 | 55 | 55 |
| | Maximum temperature | 75 | 90 | 75 | 75 |
| Cracking of coating film | | No | No | No | No |
| Non-uniformity of coating film | | No | No | No | No |
| Mandrel test | | O | O | O | O |
| Fire-extinguishing test | | O | O | O | O |

**[Table 2]**

| | | Example 5 | Example 6 | Example 7 | Example 8 |
|---|---|---|---|---|---|
| Fire-extinguishing agent | | Mixture of tripotassium citrate and potassium chlorate | | | |
| Binder resin | Material | PVB | AD-393 | TE5899 | Ether-based polyurethane |
| | | EX-861 | CAT-EP1 | | |
| | Tensile elongation at break [mm] | 56.6 | 145.7 | 452.5 | 475.1 |
| Liquid medium | | Ethanol | Ethanol IPA | Ethanol Ethyl acetate | Ethanol |
| Coating liquid viscosity [mPa·s] | | - | - | - | 1,620 |
| Drying temperature [°C] | Preheating temperature | 55 | 55 | 55 | 55 |
| | Maximum temperature | 75 | 75 | 75 | 75 |
| Cracking of coating film | | No | No | No | No |
| Non-uniformity of coating film | | No | No | No | No |
| Mandrel test | | O | O | O | O |
| Fire-extinguishing test | | O | O | O | O |

**[Table 3]**

| | | Comparative Example 1 | Comparative Example 2 | Comparative Example 3 | Reference Example 4 |
|---|---|---|---|---|---|
| Fire-extinguishing agent | | Mixture of tripotassium citrate and potassium chlorate | | | |
| Binder resin | Material | M-100 | PVB | PVB | Ether-based polyurethane |
| | | C-97 | X-12-1287A | X-12-1267B | |
| | Tensile elongation at break [mm] | 8.4 | 32.8 | 14.6 | 475.1 |
| Liquid medium | | Ethanol | Ethanol | Ethanol | Ethanol |
| | | Ethyl acetate | | | |
| Coating liquid viscosity [mPa·s] | | - | - | - | 950 |
| Drying temperature [°C] | Preheating temperature | 55 | 55 | 55 | 55 |
| | Maximum temperature | 75 | 75 | 75 | 75 |
| Cracking of coating film | | No | No | No | No |
| Non-uniformity of coating film | | No | No | No | Yes |
| Mandrel test | | X | X | X | X |
| Fire-extinguishing test | | O | O | O | O |

**[Table 4]**

| | | Reference Example 5 | Reference Example 6 | Reference Example 7 | Reference Example 8 | Reference Example 9 |
|---|---|---|---|---|---|---|
| Fire-extinguishing agent | | Mixture of tripotassium citrate and potassium chlorate | | | | |
| Binder resin | Material | PVB | PVB | PVB | PVB | PVB |

| | | EX-991L | EX-991L | EX-991L | EX-991L | EX-991L |
|---|---|---|---|---|---|---|
| | | X-12-1287A | X-12-1287A | X-12-1287A | X-12-1287A | X-12-1287A |
| | Tensile elongation at break [mm] | 101.6 | 101.6 | 101.6 | 101.6 | 101.6 |
| Liquid medium | | Ethanol | Ethanol | Ethanol | Ethanol | Ethanol |
| Coating liquid viscosity [mPa·s] | | 1,560 | 4,300 | 4,300 | 4,300 | 4,300 |
| Drying temperature [°C] | Preheating temperature | 55 | 90 | - | 55 | 55 |
| | Maximum temperature | 75 | 110 | 90 | 75 | 75 |
| Cracking of coating film | | Yes | Yes | Yes | No | Yes |
| Non-uniformity of coating film | | No | No | No | No | - |
| Mandrel test | | O | X | X | O | - |
| Fire-extinguishing test | | O | O | O | X | - |

Good results were obtained in Examples 1 to 8. This is presumed to be because the tensile elongation at break of the binder resin was 45 mm or more, the coating liquid viscosity was adjusted to 1,600 mPa·s or more, the heat treatment was performed in two stages, and the maximum temperature of the heat treatment was 100°C or lower.

In Comparative Examples 1, 2, and 3, cracks occurred at 18 mm bending in the mandrel test because the tensile elongation at break of the binder resin was less than 45 mm. In Reference Examples 4 and 5, because the viscosity of the coating liquid was low, cracking of the coating film and non-uniformity due to high fluidity occurred. In Reference Examples 6 and 7, film cracking occurred due to rapid drying. In Reference Example 8, the fire-extinguishing ability decreased because the content of the fire-extinguishing agent was reduced. In Reference Example 9, a coating film could not be formed because the content of the binder resin was small.

### [Reference Signs List]

- 1, 10: Fire-extinguishing material
- 2: Base material
- 3: Fire-extinguishing agent layer
- 4: Resin layer
- 5: Adhesive layer
- 6: Water vapor barrier layer
- 7: Pressure-sensitive adhesive layer
- 8: Release film

## Claims

1. A fire-extinguishing material comprising: a base material; and
a fire-extinguishing agent layer formed on at least one surface of the base material, wherein
the fire-extinguishing agent layer contains a fire-extinguishing agent and a binder resin,
a content of the fire-extinguishing agent in the fire-extinguishing agent layer is 60% by mass to 98% by mass relative to a mass of the fire-extinguishing agent layer, and
a tensile elongation at break of the binder resin is 45 mm or more.

2. The fire-extinguishing material according to claim 1, wherein
a content of the binder resin in the fire-extinguishing agent layer is 2% by mass to 40% by mass relative to a mass of the fire-extinguishing agent layer.

3. The fire-extinguishing material according to claim 1 or 2, wherein
a total amount of the fire-extinguishing agent and the binder resin in the fire-extinguishing agent layer is 80% by mass to 100% by mass relative to a mass of the fire-extinguishing agent layer.

4. The fire-extinguishing material according to any one of claims 1 to 3, wherein
a thickness of the fire-extinguishing agent layer is 70 µm to 500 µm.

5. The fire-extinguishing material according to any one of claims 1 to 4, wherein
the binder resin contains at least one resin selected from a group consisting of polyvinyl butyral resin, epoxy resin, urethane resin, modified urethane resin, and ether-based polyurethane resin.

6. The fire-extinguishing material according to any one of claims 1 to 5, wherein
the binder resin contains a compound having an acid anhydride group and an alkoxysilyl group.

7. The fire-extinguishing material according to claim 1, wherein
the tensile elongation at break is an elongation at break of a sample measured by carrying out a tensile test in accordance with JIS K 7127 under conditions of a distance between sample chucks of 10 cm and a tensile speed of 50 mm/min, and
the sample is a Type 2 test piece sample specified in JIS K 7127, and consists of a film having a thickness of 90 µm composed of the binder resin extracted from the fire-extinguishing agent layer.

8. The fire-extinguishing material according to any one of claims 1 to 7, wherein
a mandrel diameter is 18 mm or less.

9. The fire-extinguishing material according to claim 8, wherein
the mandrel diameter is a minimum diameter of a mandrel at which no cracks are observed in the base material and the fire-extinguishing agent layer when a Type 1 mandrel test is performed on the fire-extinguishing material in accordance with JIS K 5600-5-1.

10. A composition for a fire-extinguishing material comprising a fire-extinguishing agent and a binder resin, wherein
a content of the fire-extinguishing agent is 60% by mass to 98% by mass relative to a total mass of a solid content of the composition for a fire-extinguishing material, and
a tensile elongation at break of the binder resin is 45 mm or more.

11. The composition for a fire-extinguishing material according to claim 10, further comprising a liquid medium, wherein
a viscosity measured at a rotational speed of 12 rpm using a Brookfield viscometer is 1,600 mPa·s or more.

12. The composition for a fire-extinguishing material according to claim 11, wherein
a boiling point of the liquid medium is 60°C to 90°C.

13. A method for producing a fire-extinguishing material comprising:
a step (a) for forming a coating film by applying the composition for a fire-extinguishing material according to claim 12 on at least one surface of a base material by a wet coating method; and
a step (b) for forming a fire-extinguishing agent layer on the surface of the base material by drying the coating film, wherein
a maximum temperature when drying the coating film in step (b) is 100°C or lower, and
a temperature is raised stepwise after starting step (b) until the maximum temperature is reached.

14. A method for producing a fire-extinguishing material comprising:
a step (a) for forming a coating film of the composition for a fire-extinguishing material according to claim 12 on at least one surface of a base material by a wet coating method; and
a step (b) for forming a fire-extinguishing agent layer on the surface of the base material by drying the coating film, wherein
a maximum temperature when drying the coating film in step (b) is 100°C or lower, and
a temperature is raised continuously after starting step (b) until the maximum temperature is reached.

15. The method for producing a fire-extinguishing material according to claim 13 or 14, wherein
the wet coating method is a coating method selected from a group consisting of comma coating, gravure coating, curtain coating, and die coating.
